# EUROPEAN PATENT SPECIFICATION

(11) **EP 0 944 689 B1**
(45) Date of publication and mention of the grant of the patent: **03.09.2003**
(21) Application number: 97936985.7
(22) Date of filing: 26.06.1997
(51) Int. Cl.: C09K 9/02, G03C 1/685, G02B 5/23, C09D 175/04

(54) **STABILIZED MATRIX FOR PHOTOCHROMIC ARTICLES**
STABILISIERTE MATRIX FÜR PHOTOCHROME ARTIKEL
MATRICE STABILISEE DESTINEE A DES ARTICLES PHOTOCHROMIQUES

(30) Priority: 23.07.1996 FR 9609236
(43) Date of publication of application: 29.09.1999
(73) Proprietor: CORNING INCORPORATED, Corning, N.Y. 14831 (US)
(72) Inventor: HENRY, David, F-91240 Saint-Michel-sur-Orge (FR)
(74) Representative: Le Roux, Martine
(86) International application number: US9712759
(87) International publication number: WO98003890

(56) References cited:
- WO-A-95/10790
- US-A- 5 208 132
- US-A- 5 391 327
- US-A- 5 498 686
- DATABASE WPI Section Ch, Week 9431 Derwent Publications Ltd., London, GB; Class A14, AN 94-252943 XP002027908 & JP 06 184355 A (SUMITOMO CHEM CO LTD), 5 July 1994 (1994-07-05)
- DATABASE WPI Section Ch, Week 9140 Derwent Publications Ltd., London, GB; Class A89, AN 91-290915 XP002027909 & JP 03 192249 A (TORAY IND INC), 22 August 1991 (1991-08-22)

## Description

### BACKGROUND OF THE INVENTION

The invention relates to a photochromic article formed by applying a novel stabilizing polymeric matrix on a transparent substrate, which matrix includes a photochromic dye and an agent that stabilizes the dye against light being grafted onto the matrix.

Organic photochromic materials are well known. They comprise a polymer matrix including a photochromic dye. One drawback of most of these materials is that their photochromic properties degrade too rapidly so that it is not possible to manufacture commercially usable articles from them, because their lifespan is insufficient. This degradation of the photochromic properties is due to a fatigue of the photochromic dye caused by light. Thus, there has been a need for many years for stable organic photochromic materials.

Several methods have been suggested for producing such a product. For example, it has been suggested to incorporate photochromic dyes into polymerizable compositions in order to impart photochromic properties to the resulting polymer. The difficulty in this approach lies in the fact that the photochromic dyes are sometimes destroyed during the polymerization. Recently, several novel suggestions have been disclosed for alleviating such problems. Examples of such solutions are disclosed in co-pending, co-assigned U.S. provisional patent application nos. 60/000,829, 60/001,677, 60/004,492, and 60/011,429.

EP A 0195898 and its equivalent USA 4,720,356 describe the incorporation in the composition of the polymerizable matrix of a hindered amine as light stabilizer routinely called HALS. (Hindered, in this sense relates to steric hindrance.) Although the addition of a HALS to the polymerizable matrix composition considerably improves the resistance to fatigue of the photochromic dye, more durable photochromic materials are still needed.

The object of the invention is to satisfy this need.

### SUMMARY OF THE INVENTION

Briefly, the invention is based on the idea of chemically combining a hindered amine to the macromolecules of a polymer matrix, rather than simply incorporating it in this matrix as in the above-mentioned patents.

The invention relates to a photochromic article characterized in that it comprises a transparent substrate bearing at least one coating made of a polymer matrix including a photochromic dye and, as agent for stabilizing said dye against exposure to light, a hindered amine that is chemically bound to the macromolecules of the polymer matrix.

In particular, the invention relates to a stabilizing matrix for photochromic compounds, which matrix contains a functionalized hindered amine light stabilizer capable of reacting with an isocyanate group, and is linked to the polymer backbone by a covalent bond to form a stable functionalized (i.e., grafted) structure.

According to a preferred embodiment, the polymer matrix is a polyurethane. In this emboidiment, the invention relates to a photochromic organic material comprising a plastic substrate having formed thereon, a coating of a matrix composition, the composition being a polyurethane formulation comprising an isocyanate, a polyol, a hindered amine light stabilizer, and a photochromic dye.

The invention also relates to a polymerizable coating composition that forms photochromically stabilized polyurethane, useful for the production of the photochromic article of the invention, comprising at least one polyisocyanate and at least one polyol, the polyisocyanate-polyol pair being chosen in such a manner that one of them presents one functional group more than the other; a photochromic dye preferably of the class of spiroxazines; a light stabilizer of the hindered amine-type, which amine comprises a reactive function with an isocyanate group; and optionally, a catalyst.

The term polyisocyanate is understood to denote a compound comprising two isocyanate groups or more. Similarly, the term polyol is understood to denote a compound comprising two hydroxyl groups or more, with the condition that the polyisocyanate and the polyol used comprise in total at least five isocyanate and hydroxyl groups. That is, the polyisocyanate must comprise at least three isocyanate groups when the polyol is a diol, and the polyol must comprise at least three hydroxyl groups when the polyisocyanate is a diisocyanate.

For the purposes of the invention, the term polyol includes the polythiols.

Preferably, the hindered amine comprises a reactive hydroxyl group, the polyisocyanate comprises three isocyanate groups and the polyol is a diol.

In another aspect, the invention relates to a method of making a photochromic organic article according to the invention, by:
a) providing a transparent plastic substrate;
b) applying a layer of a polymerizable composition of polyurethane matrix according to the invention on at least one surface of the substrate, and
c) polymerizing the layer into a coating of photochromic polyurethane.

Preferably, the matrix comprises polyisocyanate, polyol, a hindered amine light stabilizer having a group which is capable of reacting with isocyanate to form a urethane function, a spirooxazine, a catalyst, and a solvent.

The thickness of the coating may be in the range of 5-150, preferably, 10-100 microns.

### DETAILED DESCRIPTION OF THE INVENTION

Photochromic materials, in particular photochromic materials useful for ophthalmic applications such as lenses require good stability against photodegradation. Thus, such materials must be resistance to fatigue substantially over the useful life of the lens. One useful class of photochromic dyes useful for photochromic ophthalmic applications is spirooxazines. As stated earlier, one difficulty in making photochromic articles is the tendency of the photochromic dyes to lose photochromic activity in a polymer matrix with time. One class of stabilizers which have been suggested for such application is a hindered amine light stabilizer, or HALS. Particularly for ophthalmic applications, it is desirable to provide lenses having relatively thin photochromic coatings.

It is known that in order to produce a thin coating having good photochromic response it is necessary to obtain a spirooxazine surface coverage of about 0.35 mg/cm². J. C. Crano et al., Applied Photochromic Polymer Systems, edited by C. B. McArdle (Chapman and Hall, NY: 1992), p. 68. It is also known that in order to be effective, HALS concentrations needed to obtain good photochromic response are in the neighborhood of about twice the coverage needed for spirooxazine. Nory Y. C. Chu, Optical Materials Technology for Energy Efficiency and Solar Energy Conversion VII, Spie. Vol. 1016 (1988), p.152. As a result, for low thickness coatings, the spirooxazine and HALS concentrations necessary for good photochromic response becomes impractically high. Such high concentrations are impractical because the solubility of spirooxazine and HALS in the matrix is relatively low. In addition, the physical and chemical properties of the matrix is significantly altered at such high concentrations.

I have found a class of hindered amine light stabilizers which alleviate the above problems. In particular, I have found that hindered amine light stabilizers having reactive functionalities are useful for the practice of the present invention. One particularly useful example of such functionalized HALS is tetramethyl piperidinol (available from ALDRICH), which contains an OH group which can react with an isocyanate to produce a urethane function. Specifically, the -OH functionalized HALS is incorporated into a polyurethane formulation consisting of a mixture of polyisocyanate and polyol. Without intending to be bound by theory, I believe that the HALS reacts with the isocyanate groups and in the process, is linked to the polymer backbone by a covalent bond to form a grafted structure.

The resulting matrix containing the grafted structure is highly stable and the HALS becomes integral to the matrix. The matrix is stabilized because the grafting prevents any aggregation or crystallization of the HALS. Also, the concentration of the grafted HALS is higher than with conventional free molecule HALS such as TINUVIN 770 for example (available from CIBA-GEIGY).

The composition of the coating formulation is, in wt%:
30-55 wt% of polyisocyanate, 20-35 wt% of polyol, 2-10 wt% of reactive stabilizer with added functional group, 0.1-2 wt% of photochromic dye, 0-2 wt% of catalyst and 5-30 wt% of solvent. A proportion of 0.1-1 wt% of photochromic dye is preferred. After curing (i.e., after polymerization), the composition of the coating in weight percent is preferably: 30-60 polyisocyanate, 20-35 polyol, 2-10 tetramethyl piperidinol, and 0.1-1.0 photochromic dye.

Nonlimiting examples of polyisocyanates that can be used in the invention are: meta-and para-xylylene diisocyanate, hexamethylene diisocyanate, isophorone diisocyanate, 4,4'-diphenyldiisocyanate, 4,4'-diphenylmethane diisocyanate, 4,4'-dicyclohexylmethane diisocyanate and trimethyl-1,6-diisocyanatohexane.

Nonlimiting examples of diols or polyols include: ethylene glycol, propylene glycol, 1,4-berbinediol, 1,6-hexanediol, 1,8-octanediol and similar compounds, cyclohexane dimethanol, glycol polyalkoyl ethers with a molecular weight of less than 10,000 (for example, polyethylene glycol, polypropylene glycol, etc.), polyester diols (for example, polycaprolactonediol), aromatic diols, polycarbonate diols, glycerol, trimethylolpropane, hexanetriol, pentaerythritol, polythiols, etc.

All the photochromic dyes of the spiroxazine type can be suitable. The published literature on this subject is very abundant. See, for example, US A 3,562,172, 4,634,767, 4,637,698, 4,720,547, 4,756,973, 4,785,097, 4,792,224, 4,816,584, 4,831,142, 4,909,963, 4,931,219, 4,936,995, 4,986,934, 5,114,621, 5,139,707, 5,233,038, 4,215,010, 4,342,668, 4,699,473, 4,851,530, 4,913,544, 5,171,636, 5,180,524, 5,166,345 and EP A 0,508,219, 0,232,295 and 0,171,909, among others, as well as the books:
Photochromism, G. Brown, Editor, Techniques of Chemistry, Wiley Interscience, Vol. III (1971), Chapter III, pp. 45-294, R. C. Bertelson
Photochromism - Molecules & Systems, H. Dürr H Bouas-Laurent, Editor, Elsevier (1990), Chapter 8: Spiropyrans, pp. 314-455, R. Guglielmetti
Optional catalysts include all the catalysts which are conventionally used in the polyurethane formulations. Dibutyltin dilaurate and stannous octoate are used most routinely.

The following nonlimiting examples are given for the purpose of illustrating the invention.

### EXAMPLES

1. Coating Composition (Matrix): Example 1 represents the invention, while Examples 2 and 3 are comparative compositions showing respectively, a formulation using a non-functionalized HALS, and without a stabilizer.

| | Ex.1 | Ex.2 | Ex.3 |
|---|---|---|---|
| | weight (g) | | |
| Polyisocyanate¹ | 9.42 | 9.42 | 9.42 |
| Polyol² | 5.30 | 5.30 | 5.30 |
| Stabilizer³ | _ | 1.75 | _ |
| Reactive Stabilizer⁴ | 1.15 | _ | _ |
| Photochromic Dye⁵ | 0.15 | 0.15 | 0.15 |
| Catalyst⁶ | 0.02 | 0.02 | 0.02 |
| Solvent⁷ | 4.00 | 4.00 | 4.00 |

| | | | |
|---|---|---|---|
| ¹ CYTHANE 3160 (an aliphatic polyisocyanate resin available from AMERICAN CYANAMID COMPANY) | | | |
| ² POLYCAPROLACTONE DIOL MW=530 available from ALDRICH | | | |
| ³ TINUVIN 770 DF (HALS) available from CIBA-GEIGY | | | |
| ⁴ TETRAMETHYL PIPERIDINOL available from ALDRICH | | | |
| ⁵ VARICROL BLUE D (a spirooxazine photochromic dye available from ENICHEM) | | | |
| ⁶ DIBUTYLTIN DILAURATE available from ALDRICH | | | |
| ⁷ TETRAHYDROFURAN available from ALDRICH | | | |

2. A coating of about 100 microns of each of the above three photochromic formulations were applied to the surface of a plano lens made of CR39^{R} (a polybis(allylcarbonate) of diethylene glycol available from PPG Industries), and cured at 50 °C for 1 hour, and 130 °C for an additional hour.
After curing, the transmittance of each coated sample was measured. All three samples showed very high transmittances (>90%). Also, each sample had acceptable optical quality.
3. In the following experiment, each of the three coated samples was exposed for 240 hours to a Xenon lamp source (E= 150,000, Lx/I=850 W/m²), at a temperature of about 40°C. The transmittance of each sample was remeasured after 72, 120, and 240 hours. The results are summarized below:

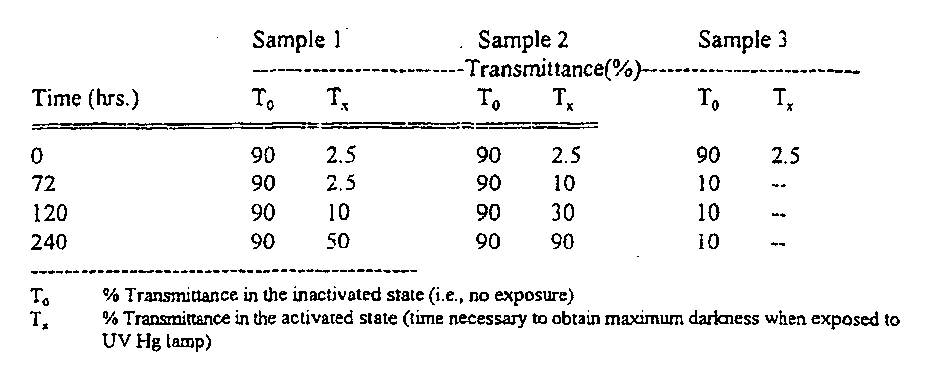

As shown from the above table, after 72 hours of light exposure, no photochromic effect is observed in Sample 3, coated with the comparative formulation of Ex. 3 with no stabilizer. Sample 2, coated with the comparative formulation of Ex. 2 (using TINUVIN 770), exhibited opacification due to crystallization of the stabilizer. The non-grafted stabilizer (TINUVIN 770), after 72 hours of light exposure, was observed to migrate to, and crystallize on, the surface of the samples. Measurements by differential thermal analysis showed a melting point of about 85 °C for the crystals, which is characteristic of this stabilizer.

As shown from the above experiments, the use of the inventive grafted (functionalized) stabilizer leads to improved photochromic performance after exposure to light, and also allows for the incorporation of a larger amount of stabilizer to the matrix without any significant detrimental effects on photochromicity since the grafted stabilizer does not migrate.

## Claims

1. A photochromic organic material comprising a transparent plastic substrate having formed thereon at least one coating composition of a polymer matrix, said matrix having macromolecules and comprising a photochromic dye, and a hindered amine light stabilizer which is chemically bonded to the macromolecules of said polymer matrix.

2. The photochromic of claim 1, wherein the polymer matrix comprises polyurethane.

3. The photochromic material of claim 1 or 2, wherein said coating composition consists essentially, in weight percent, of : 30 - 60 wt% of polyisocyanate, 20 - 35 wt % of polyol, 2 - 10 wt % of a reactive light stabilizer, and 0.1 - 1.0 wt % of photochromic dye.

4. The photochromic material of any one of claims 1 to 3, wherein the coating composition further comprises a catalyst and a solvent

5. The photochromic material of any one of claims 1 to 4, wherein the photochromic dye is a spirooxazine.

6. The photochromic material of any one of claims 1 to 5, wherein said coating has a thickness in the range of 5 - 150 microns.

7. The photochromic material of claim 6, wherein the coating thickness is in the range of 10 - 50 microns.

8. The photochromic material of any one of claims 1 to 7, wherein the plastic substrate is a lens made of polybis(allyl carbonate) of diethylene glycol.

9. A polymerizable coating composition, suitable to form a stabilized photochromic polyurethane, useful for the production of a photochromic organic material according to any one of claims 1 to 8, comprising at least one polyisocyanate, at least one polyol (or polythiol), the polyisocyanate-polyol (or polyisocyanate-polythiol) part being selected so that one of them presents one functional group more than the other ; a photochromic dye, preferably of the spiroxazine class ; a light stabilizer of the hindered amine-type which is functionalized with a group able to react with isocyanate to form a urethane function; and optionally, a catalyst.

10. The composition according to claim 9, wherein the hindered amine comprises a reactive hydroxyl group.

11. The composition according to claim 10, wherein the hindered amine is tetramethylpiperidinol.

12. The composition according to any one of claims 9 to 11, wherein the polyisocyanate comprises three isocyanate groups, and the polyol is a diol.

13. The composition according to any one of claims 9 to 12, wherein the composition comprises, in weight per cent : 30 - 55 wt% of polyisocyanate, 20 - 35 wt % of polyol, 2 - 10 wt % of reactive stabilizer with added functional group, 0.1 - 2 wt %, preferably 0.1 - 1 wt %, of photochromic dye, 0 - 2 wt % of catalyst and 5 - 30 wt % of solvent.

14. A method for the production of a photochromic organic material as defined in any one of claims 1 to 8, wherein it comprises the steps of:
a) selecting a substrate made of a transparent plastic substrate,
b) applying at least one layer of a polymerizable composition of polyurethane matrix as defined in any one of claims 9 to 13 to at least one of the sides of the substrate, and
c) polymerizing said layer into a coating of photochromic polyurethane.

15. The method of claim 14, wherein it comprises the steps of:
a) providing a transparent plastic substrate ;
b) combining to form a solution, at least one polyisocyanate, at least one polyol or polythiol, the polyisocyanate-poly(thi)ol pair being selected so that one of them presents one functional group more than the other, a hindered amine light stabilizer having a group which is capable of reacting with isocyanate to form a urethane function, a spirooxazine, a catalyst, and a solvent; and applying at least one coating of the said solution on at least one surface of said substrate ; and
c) curing said at least one coating.

## Patentansprüche

1. Photochromes organisches Material mit einem transparenten Kunststoffsubstrat, auf dem mindestens eine Beschichtungszusammensetzung einer Polymermatrix gebildet ist, wobei die Matrix Makromoleküle besitzt und einen photochromen Farbstoff aufweist, und einem Lichtstabilisator aus einem gehinderten Amin, das chemisch an die Makromoleküle der Polymermatrix gebunden ist.

2. Photochromes Material nach Anspruch 1, bei dem die Polymermatrix Polyurethan umfasst.

3. Photochromes Material nach Anspruch 1 oder 2, bei dem die Beschichtungszusammensetzung im Wesentlichen in Gew.-% aus 30 bis 60 Gew.-% Polyisocyanat, 20 bis 35 Gew.-% Polyol, 2 bis 10 Gew.-% eines reaktiven Lichtstabilisators und 0,1 bis 1,0 Gew.-% photochromem Farbstoff besteht.

4. Photochromes Material nach einem der Ansprüche 1 bis 3, bei dem die Beschichtungszusammensetzung weiter einen Katalysator und ein Lösemittel umfasst.

5. Photochromes Material nach einem der Ansprüche 1 bis 4, bei dem der photochrome Farbstoff ein Spirooxazin ist.

6. Photochromes Material nach einem der Ansprüche 1 bis 5, bei dem die Beschichtung eine Dicke im Bereich von 5 bis 150 µm besitzt.

7. Photochromes Material nach Anspruch 6, bei dem sich die Beschichtung im Bereich von 10 bis 50 µm befindet.

8. Photochromes Material nach einem der Ansprüche 1 bis 7, bei dem das Kunststoffsubstrat eine Linse ist, die aus einem Polybis(allylcarbonat) eines Diethylenglykols gemacht ist.

9. Polymerisierbare Beschichtungszusammensetzung, die zum Bilden eines stabilisierten photochromen Polyurethans geeignet ist und für die Herstellung eines photochromen organischen Materials nach einem der Ansprüche 1 bis 8 nützlich ist, mit mindestens einem Polyisocyanat, mindestens einem Polyol oder Polythiol, wobei das Polyisocyanat-polyol- oder Polyisocyanat-polythiol-Paar so ausgewählt ist, dass eines davon eine funktionelle Gruppe mehr als das andere bereitstellt, einem photochromen Farbstoff, bevorzugt von der Spirooxazinklasse, einem Lichtstabilisator des gehinderten Amin-Typs, der mit einer Gruppe funktionalisiert ist, die fähig ist, mit Isocyanat zum Bilden einer Urethanfunktion zu reagieren, und optional einem Katalysator.

10. Zusammensetzung nach Anspruch 9, bei dem das gehinderte Amin eine reaktive Hydroxylgruppe umfasst.

11. Zusammensetzung nach Anspruch 10, bei dem das gehinderte Amin Tetramethylpiperidinol ist.

12. Zusammensetzung nach einem der Ansprüche 9 bis 11, bei dem das Polyisocyanat drei Isocyanatgruppen umfasst, und das Polyol ein Diol ist.

13. Zusammensetzung nach einem der Ansprüche 9 bis 12, bei dem die Zusammensetzung in Gew.-% umfasst: 30 bis 55 Gew.-% Polyisocyanat, 20 bis 35 Gew.-% Polyol, 2 bis 10 Gew.-% reaktiver Stabilisator mit einer zusätzlichen funktionellen Gruppe, 0,1 bis 2 Gew.-%, bevorzugt 0,1 bis 1 Gew.-% photochromen Farbstoff, 0 bis 2 Gew.-% Katalysator und 5 bis 30 Gew.-% Lösemittel.

14. Verfahren zur Herstellung eines photochromen organischen Materials wie in einem der Ansprüche 1 bis 8 definiert, wobei es die Schritte aufweist:
a) Auswählen eines Substrats, das aus einem transparenten Kunststoffsubstrat gemacht ist,
b) Aufbringen mindestens einer Schicht einer polymerisierbaren Zusammensetzung einer Polyurethanmatrix, wie in einem der Ansprüche 9 bis 13 definiert, auf mindestens eine der Seiten des Substrats, und
c) Polymerisieren der Schicht zu einer Beschichtung eines photochromen Polyurethans.

15. Verfahren nach Anspruch 14, wobei es die Schritte umfasst:
a) Bereitstellen eines transparenten Kunststoffsubstrats,
b) Kombinieren mindestens eines Polyisocyanats, mindestens eines Polyols oder Polythiols, wobei das Polyisocyanat-poly(thi)ol-Paar so ausgewählt ist, dass eines davon eine funktionelle Gruppe mehr als das andere bereitstellt, eines Lichtstabilisators aus einem gehinderten Amin mit einer Gruppe, die fähig ist, mit Isocyanat zum Bilden einer Urethanfunktion zu reagieren, eines Spirooxazins, eines Katalysators und eines Lösemittels, um eine Lösung zu bilden und Aufbringen mindestens einer Beschichtung der Lösung auf mindestens eine Oberfläche des Substrats, und
c) Härten des Substrats.

## Revendications

1. Matériau organique photochromique comprenant un substrat plastique transparent sur lequel est formée au moins une composition de revêtement d'une matrice polymère, ladite matrice ayant des macromolécules et comprenant un colorant photochromique, et un stabilisant à la lumière de type amine à empêchement stérique qui est lié chimiquement aux macromolécules de ladite matrice polymère.

2. Matériau photochromique selon la revendication 1, où la matrice polymère comprend un polyuréthane.

3. Matériau photochromique selon la revendication 1 ou 2, où ladite composition de revêtement consiste essentiellement, en pour cent en masse, en : 30 - 60 % en masse de polyisocyanate, 20 - 35 % en masse de polyol, 2 - 10 % en masse d'un stabilisant à la lumière réactif et 0,1 - 1,0 % en masse de colorant photochromique.

4. Matériau photochromique selon l'une quelconque des revendications 1 à 3, où la composition de revêtement comprend en outre un catalyseur et un solvant.

5. Matériau photochromique selon l'une quelconque des revendications 1 à 4, où le colorant photochromique est une spirooxazine.

6. Matériau photochromique selon l'une quelconque des revendications 1 à 5, où ledit revêtement a une épaisseur dans le domaine de 5- 150 µm.

7. Matériau photochromique selon la revendication 6, où l'épaisseur du revêtement est dans le domaine de 10 - 50 µm.

8. Matériau photochromique selon l'une quelconque des revendications 1 à 7, où le substrat plastique est une lentille en polybis(allylcarbonate) de diéthylèneglycol.

9. Composition de revêtement polymérisable qui convient pour former un polyuréthane photochromique stabilisé, utile pour la production d'un matériau organique photochromique selon l'une quelconque des revendications 1 à 8, comprenant au moins un polyisocyanate, au moins un polyol (ou un polythiol), la paire polyisocyanate-polyol (ou polyisocyanate-polythiol) étant choisie de telle manière que l'un d'eux présente un groupe fonctionnel de plus que l'autre ; un colorant photochromique, de préférence de la classe des spirooxazines; un stabilisant à la lumière du type amine à empêchement stérique qui est fonctionnalisé avec un groupe capable de réagir avec un isocyanate pour former une fonction uréthane ; et éventuellement un catalyseur.

10. Composition selon la revendication 9, où l'amine à empêchement stérique comprend un groupe hydroxyle réactif.

11. Composition selon la revendication 10, où l'amine à empêchement stérique est le tétraméthylpipéridinol.

12. Composition selon l'une quelconque des revendications 9 à 11, où le polyisocyanate comprend trois groupes isocyanates et le polyol est un diol.

13. Composition selon l'une quelconque des revendications 9 à 12, où la composition comprend, en pour cent en masse : 30 - 55 % en masse de polyisocyanate, 20 - 35 % en masse de polyol, 2 - 10 % en masse de stabilisant réactif à groupe fonctionnel ajouté, 0,1 - 2 % en masse, de préférence 0,1 - 1 % en masse, de colorant photochromique, 0 - 2 % en masse de catalyseur et 5 - 30 % en masse de solvant.

14. Procédé de production d'un matériau organique photochromique selon l'une quelconque des revendications 1 à 8, qui comprend les étapes de :
a) sélection d'un substrat constitué par un substrat plastique transparent,
b) application d'au moins une couche d'une composition polymérisable de matrice de polyuréthane selon l'une quelconque des revendications 9 à 13 à au moins l'un des côtés du substrat, et
c) polymérisation de ladite couche en un revêtement de polyuréthane photochromique.

15. Procédé selon la revendication 14 qui comprend les étapes de :
a) fourniture d'un substrat plastique transparent ;
b) combinaison pour former une solution, d'au moins un polyisocyanate, d'au moins un polyol ou polythiol, la paire polyisocyanate-polyol (polythiol) étant choisie de telle manière que l'un deux présente un groupe fonctionnel de plus que l'autre, d'un stabilisant à la lumière de type amine à empêchement stérique ayant un groupe qui est capable de réagir avec un isocyanate pour former une fonction uréthane, d'une spirooxazine, d'un catalyseur, et d'un solvant ; et application d'au moins un revêtement de ladite solution sur au moins une surface dudit substrat ; et
c) cuisson dudit au moins un revêtement.
